(19) Europäisches Patentamt

European Patent Office

Office européen des brevets

(11) **EP 1 492 289 A2**

(12) **EUROPEAN PATENT APPLICATION**

(43) Date of publication:
**29.12.2004 Bulletin 2004/53**

(51) Int Cl.7: **H04L 25/03**

(21) Application number: **04102951.3**

(22) Date of filing: **24.06.2004**

| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Wu, Song**<br>  **Plano, TX Texas 75024 (US)**<br>• **Gu, Richard**<br>  **Plano, TX Texas 75025 (US)** |
| --- | --- |
| (30) Priority: **25.06.2003 US 603302** | (74) Representative: **Holt, Michael et al**<br>**Texas Instruments Ltd.,**<br>**PO Box 5069**<br>**Northampton, Northamptonshire NN4 7ZE (GB)** |
| (71) Applicant: **TEXAS INSTRUMENTS INCORPORATED**<br>**Dallas, TX 75265 (US)** | |

(54) **Decision feedback equalization for high speed serial links**

(57) A decision feedback equalizer architecture (13, 15, 17) uses a hybrid digital and analog scheme that can elevate performance to the operational speed of the gigahertz baud rate.

FIG. 1

EP 1 492 289 A2

**Description**

FIELD OF THE INVENTION

The invention relates generally to communications networks and, more particularly, to a decision feedback equalizer for gigabits serializer/deserializer applications.

BACKGROUND OF THE INVENTION

High-speed (i.e., gigabits) serial links are widely used in dense wavelength division multiplexing synchronous optical networks ("DWDM/SONET"), particularly in storage area network and Internet infrastructure backbone communications. High-speed serial links provide a vehicle for chip to chip and backplane to backplane interconnection in both data communication and telecommunication switching boxes. The progress made in data speed has been outpaced by the increase in demand for faster speeds and further distances. However, as speeds and distances increase, the communication media, typically a printed circuit board ("PCB") or optical fiber channel, becomes a bottleneck. The physical channel typically suffers from attenuation losses at high frequencies that can result in inter-symbol interference ("ISI") thereby limiting the transmission throughput. Additionally, in many data applications the data traffic is unidirectional. Therefore, it is not feasible to use adaptive pre-compensation (e.g., using a receiver to send the channel information back to the transmitter) before the data is transmitted. A receiver equalizer offers a better solution. In a practical system, chips can be located in different places on different boards with interconnections through various lengths of traces, cables and types of connectors. It is very difficult to design a universal predetermined equalizer to accommodate all the possible configurations.

It is therefore desirable to provide a solution that can accommodate as many configurations as possible. Exemplary embodiments of the present invention provide an equalizer that uses analog signal processing to accommodate a wide variety of configurations.

BRIEF DESCRIPTION OF THE DRAWINGS

The above and further advantages of the invention may be better understood by referring to the following description in conjunction with the accompanying drawings in which corresponding numerals in the different figures refer to the corresponding parts, in which:

FIGURE 1 diagrammatically illustrates pertinent portions of exemplary embodiments of a communication receiver according to the invention.
FIGURE 1A illustrates an example of a DAC from FIGURE 1.
FIGURE 2 diagrammatically illustrates pertinent portions of exemplary embodiments of a communication transmitter according to the invention.
FIGURE 3 illustrates in tabular format various parameters which can be used during iteratively adaptive operation of the receiver of FIGURE 1.
FIGURE 4 is a signal timing diagram which illustrates the effect of inter-symbol interference.
FIGURE 5A illustrates an example of an input waveform that can be received by a decision feedback equalizer according to the invention.
FIGURE 5B illustrates an output waveform which can be produced by exemplary embodiments of a decision feedback equalizer according to the invention in response to the input waveform of FIGURE 5A.
FIGURE 5C illustrates the convergence of equalizer taps used by exemplary embodiments of a decision feedback equalizer according to the invention.
FIGURE 6 diagrammatically illustrates exemplary embodiments of an apparatus for iteratively adapting feedback equalizer coefficients according to the invention.

DETAILED DESCRIPTION

While the making and using of various embodiments of the present invention are discussed herein in terms of decision feedback equalizers in synchronous optical networks ("SONET"), it should be appreciated that the present invention provides many inventive concepts that can be embodied in a wide variety of contexts. The specific embodiments discussed herein are merely illustrative of specific ways to make and use the invention, and are not meant to limit the scope of the invention.

The present invention is based on the concept of the decision feedback equalizer ("DFE"). Although DFEs have been widely used in low-speed digital communication systems, the implementation has been mainly in the digital domain. The system digitizes the incoming signal using an analog to digital converter ("ADC") and then uses a digital algorithm engine to perform digital signal processing ("DSP") tasks. However, in the multi-gigahertz baud rate regime, this scheme becomes impractical. Exemplary embodiments of the present invention can provide a novel DFE architecture and training algorithm in a hybrid digital and analog scheme that can elevate the DFE performance to the operational speed of the gigahertz baud rate.

An analysis of the cause of inter-symbol interference ("ISI") aids in the understanding of the present invention. Assuming a perfect transmitter, continuously sending a random bit stream, the transmission waveform is given as:

Equation 1

$$x(t) = \sum_n a_n \cdot p(t - nT)$$

where $a_n$ is the data symbol, and $p(t)$ is a single pulse waveform comprising rising and falling edges. Therefore, at the receiver, the waveform becomes:

Equation 2

$$y(t) = \sum_n a_n \cdot \int p(\tau - nT) \cdot h(t - \tau) d\tau$$
$$= \sum_n a_n \cdot \varphi(t - nT).$$

where $h(t)$ is the channel impulse response and $\varphi(t) = \int p(\tau h) \{t\ \tau) d\tau$. Assuming $\varphi(t)$ peaks at $t_{max}$, then $t = nT + t_{max}$ corresponds to the maximum eye open point at each receiving symbol point. An independent clock data recovery ("CDR") section (not explicitly shown) can search and lock to those points. At the eye open point of $t = mT + t_{max}$, the signal is:

Equation 3

$$y_m = a_m \cdot \varphi(t_{max}) + \sum_{k=0\cdots} a_{m-1-k} \cdot \varphi(t_{max} + T + kT).$$

The summation term gives the contribution from previous symbols. If $\varphi(t)$ spans more than one (1) symbol period, this contribution is significant and the vertical eye open is smeared by previous symbols with the amplitude of $\varphi(t_{max} + kT) \neq 0$.

Ideally, if the transition from $a_{m-1}$ to $a_m$ crosses zero at the middle point between the two (2) symbols (*i.e.*, $y(t_{max} + (m-1)T + T/2) = 0$), the eye should have the maximum horizontal opening. However, due to the ISI, the amount of the "vertical jitter" at the middle point between the two (2) symbols can be expressed as:

Equation 4

$$y_{m-1/2} = \sum_{k=0\cdots} a_{m-1-k} \cdot \varphi(t_{max} + T/2 + kT) + a_m \cdot \varphi(t_{max} - T/2).$$

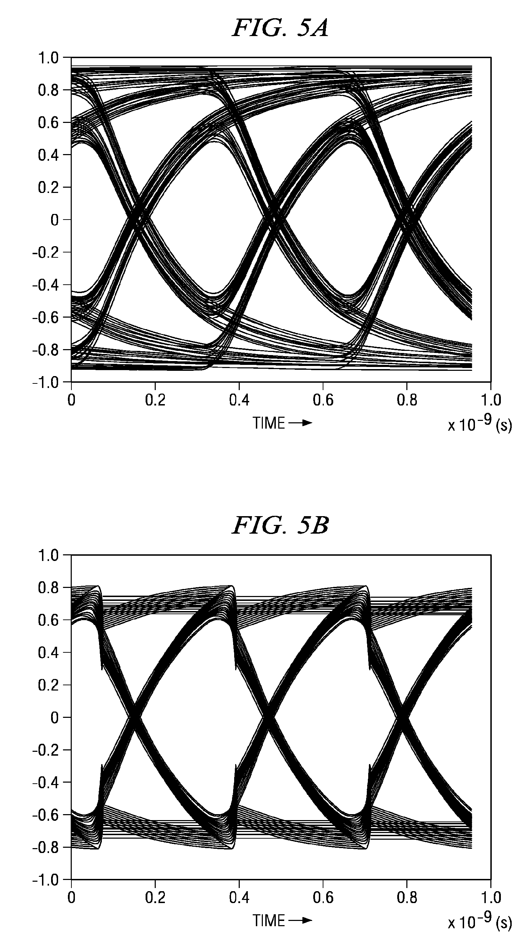

Since the data changes polarity from $a_{m-1}$ to $a_m$ (i.e., $a_m = -a_{m-1}$), $y_{m-1/2} \neq 0$ if $\varphi(t_{max} + T/2) \neq \varphi(t_{max} - T/2)$. The effects of ISI at the eye open point of Equation 3 and the cross point of Equation 4 can be seen in the eye diagram of FIGURE 5A. Eye diagrams are constructed by overlaying plots of waveforms from successive unit time intervals. The decreases in the height and width of the eye can indicate severe deterioration in the bit error rate ("BER").

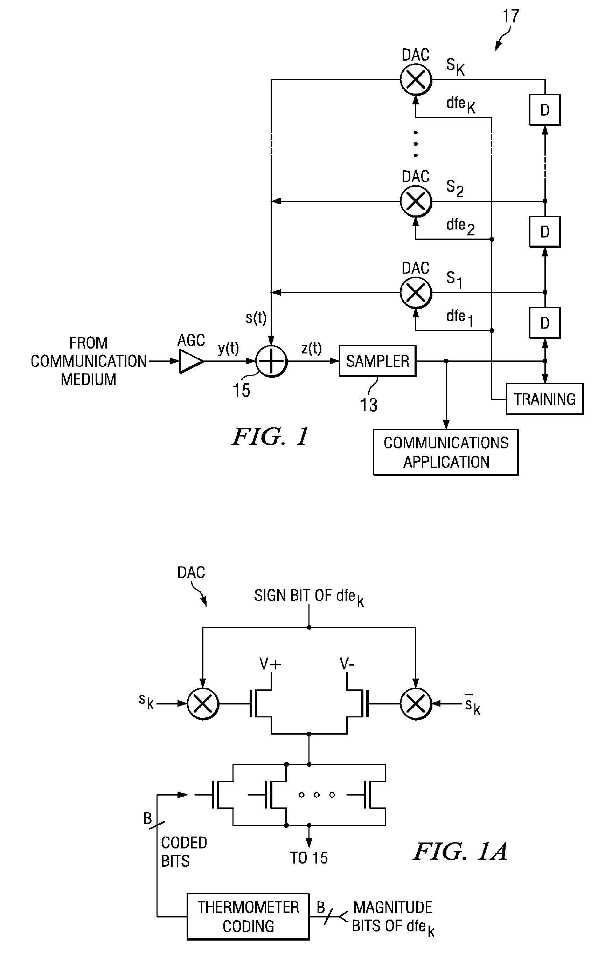

Exemplary embodiments of the present invention as illustrated in FIGURE 1 can widen the eye. As shown in FIGURE 1, a correction waveform $s(t)$ can be synthesized at the receiver front end and mixed with the incoming waveform $y(t)$ before the data is taken. Mathematically the synthesized correction waveform is

$$s(t) = -\sum_{k=1} dfe_k \cdot a_{m-k} \cdot u(t-(m-1)T-\Delta),$$

where $u(t)$ is a unit rectangle function with width $T$, and $\Delta$ is implementation delay such that $\Delta = T/2$, $dfe_k$ are filter coefficients obtained with channel response and $a_{m-k}$ are previously decoded data. The effective signal strength $z(t)$ = $y(t) + s(t)$ at the eye open point $t = mT + t_{max}$ is

$$z_m = a_m \cdot \varphi(t_{max}) + \sum_{i=-I}^{-1} a_{m+i} \cdot \varphi(t_{max} - iT) + \sum_{k=0\cdots} a_{m-1-k} \cdot \varphi(t_{max} + T + kT) - \sum_{k=0} \hat{a}_{m-1-k} \cdot dfe_{k+1},$$

and at the crossing point $t = mT + t_{max} - T/2$ is

$$z_{m-1/2} = \sum_{k=0\cdots} a_{m-1-k} \cdot \varphi(t_{max} + T/2 + kT) + a_m \cdot \varphi(t_{max} - T/2) + \sum_{i=-I}^{-1} a_{m+i} \cdot \varphi(t_{max} - iT)$$
$$- \sum_{k=0\cdots} dfe_{k+1} \cdot (\hat{a}_{m-1-k} + \hat{a}_{m-2-k})/2$$

In the foregoing effective signal strength equations, "$a$" represents the decoded version of the corresponding transmitted symbol "$a$".

At the receiver $dfe_k$ and $t_{max}$ are chosen so that $E\{z_{m-1/2}^2\} \to 0$ when $a_m = -a_{m-1}$ to achieve minimum jitter. Since $a_{m-k}$, with $k > 1$ are independent variables, we can rearrange above equation as

$$z_{m-1/2} = \sum_{k=0\cdots} a_{m-1-k} \cdot \varphi(t_{max} + T/2 + kT) + a_m \cdot \varphi(t_{max} - T/2) + \sum_{i=-I}^{-1} a_{m+i} \cdot \varphi(t_{max} - T/2 - iT)$$
$$- \sum_{k=0\cdots} dfe_{k+1} \cdot (\hat{a}_{m-1-k} + \hat{a}_{m-2-k})/2$$
$$= a_m \cdot \varphi(t_{max} - T/2) + \sum_{i=-I}^{-1} a_{m+i} \cdot \varphi(t_{max} - T/2 - iT)$$
$$+ \sum_{k=0\cdots} a_{m-1-k} \cdot \{\varphi(t_{max} + T/2 + kT) - (def_{k+1} + dfe_k)/2\}$$

and,

$$E\{z_{m-1/2}^2\} = \varphi(t_{max} - T/2)^2 + \sum_{k=0\cdots} \{\varphi(t_{max} + T/2 + kT) - (def_{k+1} + dfe_k)/2\}^2$$
$$- 2 \cdot \varphi(t_{max} - T/2) \cdot \{\varphi(t_{max} + T/2) - dfe_1/2\} + \sum_{i=-I}^{-1} \varphi(t_{max} - T/2 - iT)^2$$
$$= \{\varphi(t_{max} - T/2) - \varphi(t_{max} + T/2) + dfe_1/2\}^2 + \sum_{k=0\cdots} \{\varphi(t_{max} + T/2 + kT) - (def_{k+1} + dfe_k)/2\}^2$$
$$+ \sum_{i=-I}^{-1} \varphi(t_{max} - T/2 - iT)^2$$

The $dfe_k$ is available by making

$$\frac{\partial E\{z^2_{m-1/2}\}}{\partial dfe_k} = 0.$$

Equation 5

$$\varphi(t_{max} - T/2)\cdot\delta_{k,1} - \varphi(t_{max} - T/2 + kT) - \varphi(t_{max} + T/2 + kT)$$

$$+ (dfe_{k-1} + 2 \cdot dfe_k + dfe_{k+1})/2 = 0$$

As an example of four $dfe$ taps, four equations are available to guarantee unique solution.

$$w \quad i=1 \quad t: \varphi h_m \ (k \ _a \ t2 - _xT \ \varphi t_m / \ \mathcal{D}_a)t - _xT \ (\ \varphi \mathcal{D}_m \ /f+_2 \ e )+_x \mathcal{d} \ 2f \ ) \ e_2 \ 2 = 0$$

$$w \quad i=2 \quad h- \ _m \varphi \mathcal{3} \ _aT + 2_x - T \ (h \varphi \mathcal{5} \ _a \mathcal{e} \ \mathcal{2}_x + f \ \mathcal{Q} \ \mathcal{d} \ _2 f) \ \mathcal{d}_3 \ 2 = 0$$

$$w \quad i=3 \quad h- \ _m \varphi \mathcal{5} \ _aT + 2_x - T \ (h \varphi \mathcal{7} \ _a \mathcal{e} \ \mathcal{2}_x + f \ \mathcal{Q} \ \mathcal{d} \ _3 f) \ \mathcal{d}_4 \ 2 = 0$$

$$w \quad i=4 \quad h \ (\ k \mathcal{7}_{max} t / \ \mathcal{D} \ ) - \varphi(t_m 9T + / \mathcal{d} \ 2 f +)_x e \ (\ \mathcal{d} 23 \ f) \ e_4 \ 2 = 0$$

At the eye open point, the effective signal strength equation can be rearranged as

$$z_m = a_m \cdot \varphi(t_{max}) + \sum_{i=-I}^{-1} a_{m+i} \cdot \varphi(t_{max} - iT) + \sum_{k=0\cdots} a_{m-1-k} \cdot \varphi(t_{max} + T + kT) - \sum_{k=0} \hat{a}_{m-1-k} \cdot dfe_{k+1}$$

$$= a_m \cdot \varphi(t_{max}) + \sum_{i=-I}^{-1} a_{m+i} \cdot \varphi(t_{max} - iT) + \sum_{k=0\cdots} a_{m-1-k} \cdot \{\varphi(t_{max} + T + kT) - dfe_{k+1}\}$$

in which the first term is proportional to the signal strength, and the second term is the residual ISI. The power of residual ISI can be estimated by

$$E\{isi^2\} = \sum_{i=-I}^{-1} \varphi(t_{max} - iT)^2 + \sum_{k=0\cdots} \{\varphi(t_{max} + T + kT) - dfe_{k+1}\}^2 .$$

By minimizing the residual ISI, i.e., making

$$\frac{\partial E\{isi^2\}}{\partial dfe_k} = 0,$$

second set of equations is available

Equation 6

$$\varphi(t_{max} + kT) = dfe_k$$

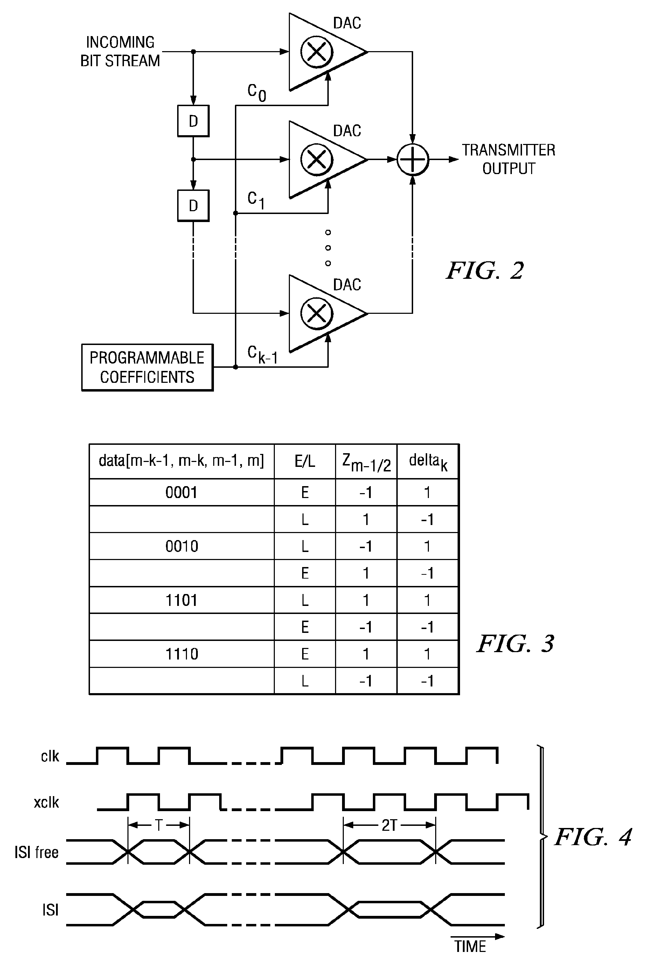

In general Equations (5) and (6) can not be satisfied at the same time. However, using a transmitter pre-emphasis technique as shown in FIGURE 2, the transmitter pulse becomes

$$P(t) = \sum_n c_n \cdot p(t - nT).$$

The new aggregate channel response is then

$$\varphi'(t) = \sum_n c_n \cdot \varphi(t - nT),$$

and should satisfy Equations (5) and (6) at the same time. Substituting $\varphi'(t)$ for $\varphi(t)$ in Equations 5 and 6, and combining Equations 5 and 6, the solution of $c_n$ is given by

## Equation 7

$$\sum_n c_n \, \varphi(t_{max} - nT - T/2) \cdot \delta_{k,1} - \sum_n (c_n + c_{n+1}) \, \varphi(t_{max} + kT - nT - T/2)$$

$$+ \sum_{..} (c_{n-1} + 2 \cdot c_n + c_{n+1}) \cdot \varphi(t_{max} + kT - nT)/2 = 0$$

Assume, for example, the above-described case of four *dfe* taps, where the four equations respectively correspond to k = 1, k = 2, k = 3 and k = 4. In this situation, Equation 7 would be evaluated for k = 1, k = 2, k = 3 and k = 4, thereby producing four separate equations. For each of the four values ofk, the index n of Equation 7 takes the values of n = 1 and n = 2, thereby producing four filter taps $c_0$, $c_1$, $c_2$ and $c_3$.

Exemplary embodiments of a receiver DFE implementation according to the invention are shown in FIGURE 1. An analog AGC (automatic gain control) block buffers the analog input to prevent the feedback signal $s(t)$ from echoing back to the line. The buffered analog input signal $y(t)$, in this example current, is wire summed with the synthesized signal $s(t)$. . The sampling receiver 13 takes samples from the mixed signal $z(t)$ to make the symbol decision. The decision symbols are then fed back to construct the new feedback signal $s(t)$. As shown in FIGURE 1, the decision symbols $S_k$ (k = 1, ... K) at different delay stages drive respective current source digital to analog converters (DAC) which are controlled by weights $dfe_k$ (k = 1, ... K) that define the taps of feedback signal $s(t)$.

In some embodiments, the tap weights $dfe_k$ are real numbers in 2's complement format. Assuming, for example, that each weight $dfe_k$ includes B bits which represent the magnitude of $dfe_k$, plus an additional bit to represent the sign of $dfe_k$ then for each of the K taps, the associated DAC has B parallel-connected current switch transistors. In some embodiments of FIGURE 1A, the B magnitude bits of $dfe_k$ are thermometer-coded, and each of the resulting B thermometer-coded bits controls a respectively corresponding one of the B transistor switches. Each decision symbol $S_k$ includes complementary bits $s_k$ and $\bar{s}_k$ which are combined (e.g. multiplied) with the associated sign bit as shown in FIGURE 1A to control the polarity of the current that the corresponding DAC contributes to the wire summation node 15. Node 15 thus functions as a feedforward equalizer.

The receiver sampler and each delay stage are triggered by the symbol clock (not explicitly shown), so the $s(t)$ waveform is a square wave with each pulse having one-symbol duration $T$. The leading tap is time critical, so some embodiments require the circuit delay from the decision sampler 13 to the leading tap DAC output to be less than half of the symbol period.

As shown in FIGURE 1, communication symbols decided by the sampling receiver 13 can also be provided to a communications application for further processing.

Referring again to the above-described transmitter pre-emphasis implementation, exemplary embodiments thereof are shown in FIGURE 2. Similar to the filter structure in FIGURE 1, each pre-emphasis tap weight $c_k$ (k = 0, 1 ... K - 1), which can be a real number in 2's complement format, controls the magnitude of a current source DAC, and the incoming data is combined with the sign bit of $c_k$ to control the polarity flowing through the wire summation node. The filter coefficients are determined by the solution of Equation (7).

To have finite signal strength and also to prevent clipping, some transmitter pre-emphasis embodiments impose extra restrictions such that

## Equation 8

$$\sum_{l=0}^{K-1} |c_l| = 1.$$

At the receiver, the filter coefficients $dfe_k$ of the feedback equalizer can be adapted iteratively using, for example, a least mean squares (LMS) technique. The $(j + 1)$th iteration is, in some LMS embodiments:

## Equation 9

$$dfe_k^{j+1} = dfe_k^j + \lambda \cdot \frac{\partial z_{m-1/2}^2}{\partial dfe_k}$$

$$= dfe_k^j - \lambda \cdot z_{m-1/2} \cdot (a_{m-k} + a_{m-k-1})$$

$$\approx dfe_k^j - \lambda \cdot \mathrm{sgn}(z_{m-1/2}) \cdot \mathrm{sgn}(a_{m-k} + a_{m-k-1})$$

The $\mathrm{sgn}(z_{m-1/2})$ can be estimated in an over-sampled system through early/late voting as illustrated generally in FIGURE 4. In FIGURE 4, clock phase clk triggers the sampler at the eye open point and clock phase xclk triggers the sampler at the eye cross point. If there is a transition between $(m - 1) \cdot T$ and $mT$, the sample taken at the xclk phase can indicate if the sample is taken before the transition or after the transition. If xclk samples late (sample after the transition), and $a_m$ is negative (i.e., $a_m = 0$ in FIGURE 3), then $\mathrm{sgn}(z_{m-1/2})$ will be negative. If xclk samples early and $a_m$ is negative, then $\mathrm{sgn}(z_{m-1/2})$ will be positive. Also, to contribute to the k-th tap update, $a_{m-k}$ and $a_{m-k-1}$ need to have the same polarity. Defining $\mathrm{sgn}(z_{m-1/2}) \cdot \mathrm{sgn}(a_{m-k} + a_{m-k-1}) = delta_k$, the truth table of $delta_k$ is shown in FIGURE 3. In some exemplary embodiments the step size, $\lambda = 1/1024$.

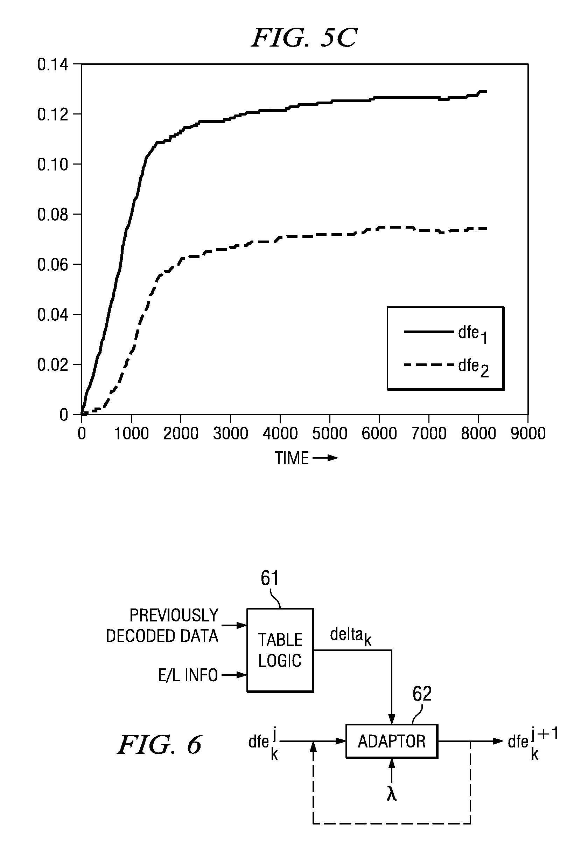

FIGURE 6 diagrammatically illustrates pertinent portions of exemplary embodiments of a communication receiver capable of performing the above-described iterative adaptation of feedback equalizer coefficients according to the invention. As shown in FIGURE 6, previously decoded data and the early/late (E/L) information are input to logic 61 which includes a table such as illustrated in FIGURE 3. The E/L information can be provided, e.g., by the sampling receiver 13 of FIGURE 1. The table implemented at 61 produces $delta_k$ in response to its aforementioned inputs, and $delta_k$ is applied to an adaptor 62. The adapter 62 also receives $\lambda$ as an input, together with the current iteration of the coefficient, $dfe_k^j$. The adaptor 62 can implement Equation 9 in response to its aforementioned inputs to produce the next iteration of the coefficient, $dfe_k^{j+1}$. As shown by broken line, the updated coefficient then becomes the current coefficient for purposes of the next iteration.

Referring again to FIGURE 4, ideal ISI-free waveforms, and real waveforms with ISI distortion are shown. As shown in FIGURE 4, the effect of ISI is to shrink the eye. If there are two transitions between $mT - T/2$ and $mT + T/2$, i.e. an early xclk sample is immediately followed by a late xclk sample, this indicates that the eye is too small. Otherwise, if there are two transitions outside $mT - T/2$ and $mT + T/2$, i.e. a late xclk sample is immediately followed by an early xclk sample, this means that the eye is too big. This technique can be readily extended by looking at multi-symbol eyes, e.g. K consecutive '1's followed by K consecutive '0's, and then back to '1' to build a K symbol eye. Once an eye with ISI is located, $dfe$ coefficients can be updated at both edges, i.e. taking into account both the eye open point and the crossover point.

FIGURE 5B shows the waveform produced at the output of an exemplary embodiment of a decision feedback equalizer according to the invention, in response to an input waveform such as shown in FIGURE 5A. This simulation uses 24 inches FR4 PCB trace and 3.2 Gbps data rate. The vertical scales representing the voltage swing are the same in FIGURE 5A for equalizer input and FIGURE 5B for equalizer output. In this example it can be seen (compare FIGURES 5A and 5B) that the signal to noise ratio (SNR) is increased by 2 dB, and the horizontal eye open is increased by 20%. For a longer channel the performance gain is even more obvious.

FIGURE 5C shows the convergence of the equalizer taps. The convergence of the equalizer is not sensitive to the step size of adaptation. However, it may be desirable to have the same sampling data to drive both CDR (clock and data recovery) and equalizer adaptation. The CDR (not explicitly shown) and equalizer training would couple with each other in such embodiments. To minimize the jitter, the DFE step size can be coordinated with CDR step size.

It will be evident to workers in the art that the exemplary embodiments described above can be readily implemented by suitable modifications in software, hardware or a combination of software and hardware in conventional decision feedback equalizers, for example DFEs used in SONET applications.

Although exemplary embodiments of the present invention have been described in detail, it will be understood by those skilled in the art that various modifications can be made therein without departing from the spirit and scope of the invention as set forth in the appended claims.

**Claims**

1.  A communication receiver apparatus, comprising:

    an input for receiving from a communication transmitter apparatus an input analog communication signal;
    a feedforward equalizer coupled to said input for producing in response to said input analog communication signal an equalized analog communication signal;
    a sampler coupled to said feedforward equalizer for producing digital communication information in response to said equalized analog communication signal; and
    a feedback equalizer coupled between said sampler and said feedforward equalizer for controlling said feedforward equalizer in response to said digital communication information.

2.  The apparatus of Claim 1, wherein said feedforward equalizer includes a wire summation node.

3.  The apparatus of Claim 1 or Claim 2, wherein said feedback equalizer includes a digital-to-analog conversion portion having an input coupled to said sampler for receiving said digital communication information, said digital-to-analog conversion portion having an output coupled to said feedforward equalizer.

4.  The apparatus of Claim 3, wherein said digital-to-analog conversion portion includes a plurality of digital-to-analog converters having respective inputs coupled to said sampler and having respective outputs coupled to said feedforward equalizer.

5.  The apparatus of Claim 4, wherein each of said digital-to-analog converters includes a current source digital-to-analog converter.

6.  The apparatus of Claim 4 or Claim 5, wherein said outputs of said digital-to-analog converters are connected together at an input of said feedforward equalizer.

7.  The apparatus of any of Claims 3 to 6, wherein said feedback equalizer includes a delay apparatus coupled between said sampler and said digital-to-analog converters for providing said digital communication information to said digital-to-analog converters at respectively different points in time.

8.  The apparatus of any preceding Claim, wherein said input analog communication signal carries a SONET communication.

9.  The apparatus of any preceding Claim, wherein said feedback equalizer includes a control input for receiving control information, said feedback equalizer responsive to said control information for controlling said feedforward equalizer, said control information designed to minimize interference at temporal boundaries between data symbols carried by said equalized analog communication signal.

10.  The apparatus of any preceding Claim, wherein said input analog communication signal is produced by the communication transmitter apparatus in response to further control information, said first-mentioned control information designed in conjunction with the further control information to minimize interference at points in time between said temporal boundaries.

11.  A communication transmitter apparatus, comprising:

    an input for receiving digital communication information;
    a digital-to-analog conversion portion coupled to said input for producing an analog communication signal in response to said digital communication information;
    an output coupled to said digital-to-analog conversion portion for providing said analog communication signal for transmission to a communication receiver apparatus;

said digital-to-analog conversion portion having a control input for receiving control information, said digital-to-analog conversion portion for producing said analog communication signal in response to said control information, said control information defined based on feedback coefficients used by a decision feedback equalizer in the communication receiver apparatus.

**12.** A decision feedback equalizer apparatus, comprising:

an input for receiving an input communication signal;

an output for providing an equalized communication signal;

an equalizer coupled between said input and said output for providing said equalized communication signal in response to said input communication signal, said equalizer having a control input for receiving an equalizer coefficient, said equalizer further responsive to said equalizer coefficient for producing said equalized communication signal; and

a coefficient adaptor apparatus coupled to said equalizer for producing said equalizer coefficient, said coefficient adaptor apparatus having an input for receiving information indicative of a temporal relationship between first and second points in time, said first point in time corresponding to an actual occurrence of a temporal boundary between data symbols carried by said equalized communication signal, said second point in time corresponding to an expected occurrence of said temporal boundary, and said coefficient adaptor apparatus for iteratively adapting said equalizer coefficient in response to said temporal relationship information.

**13.** A method of communication reception, comprising:

feedforward equalizing an input analog communication signal to produce an equalized analog communication signal;

producing digital communication information in response to said equalized analog communication signal; and

performing said feedforward equalizing step based on said digital communication information.

*FIG. 1*

*FIG. 1A*

FIG. 2

| data[m-k-1, m-k, m-1, m] | E/L | $Z_{m-1/2}$ | $delta_k$ |
|---|---|---|---|
| 0001 | E | -1 | 1 |
| | L | 1 | -1 |
| 0010 | L | -1 | 1 |
| | E | 1 | -1 |
| 1101 | L | 1 | 1 |
| | E | -1 | -1 |
| 1110 | E | 1 | 1 |
| | L | -1 | -1 |

FIG. 3

FIG. 4

*FIG. 5A*

*FIG. 5B*

## FIG. 5C

## FIG. 6